# EUROPEAN PATENT APPLICATION

(11) **EP 4 786 208 A1**
(43) Date of publication of application: **05.08.2026**
(21) Application number: 26153798.9
(22) Date of filing: 23.01.2026
(51) Int. Cl.: B60C 1/00, C08L 9/00

(54) **RUBBER COMPOSITION FOR TYRES**

(30) Priority: 31.01.2025 LU 509830
(71) Applicant: Apollo Tyres Global R&D B.V., 7521 PT Enschede (NL)
(72) Inventor: Andrzejewska-Scavo, Zuzanne Jadwiga, 7521PT Enschede (NL); Thottungal Mohamed, Mohamed Tharik, 7521PT Enschede (NL); Mondal, Anup, 7521PT Enschede (NL)
(74) Representative: Michalski Hüttermann & Partner mbB

(57) **Abstract**

The present invention relates to a cross-linkable rubber composition, a cross-linked rubber composition obtained by cross-linking such a rubber composition, a method of preparing a tyre and a tyre. The cross-linkable rubber composition comprises, per hundred parts by weight of rubber (phr): 100 phr of a blend of a natural rubber (NR), a polybutadiene rubber (BR), and first and second solution polymerized styrene-butadiene rubbers (SSBR), the blend comprising ≥ 10 phr to ≤ 40 phr of NR, ≥ 20 phr to ≤ 80 phr of BR, ≥ 10 phr to ≤ 50 phr of the first SSBR having a glass transition temperature T_{g}, determined by differential scanning calorimetry (DSC) according to ISO 22768, in a range of ≥ -30°C to ≤ 0°C, and ≥ 10 phr to ≤ 50 phr of the second SSBR having a glass transition temperature T_{g}, determined by differential scanning calorimetry (DSC) according to ISO 22768, in a range of ≥ -120°C to ≤ -40°C; ≥ 60 phr to ≤ 130 phr of a first silica filler having a BET surface area in a range of ≥ 150 m²/g to ≤ 200 m²/g, determined according to ASTM D1993, and ≥ 50 phr to ≤ 100 phr of a second silica filler having a BET surface area in a range of ≥ 70 m²/g to ≤ 100 m²/g, determined according to ASTM D1993, and a resin, wherein the rubber composition comprises in a range of ≥ 1 phr to ≤ 40 phr of aluminium hydroxide.

## Description

The present invention relates to a cross-linkable rubber composition, a cross-linked rubber composition obtained by cross-linking the rubber composition, a method of preparing a tyre and a tyre, particularly an all-season tyre or a winter tyre.

Tread rubber is one of the important portions of a pneumatic tyre which contributes enormously to the overall performance of a tyre. A tyre has to perform well in severe weather conditions, and it has to exhibit a variety of performances, while particularly all-season tyres and winter tyres have to observe a balance of various properties such as rolling resistance, wet grip and snow performance.

EP 4 421 119 A1 discloses a rubber composition with a balanced property of snow and wet grip. The rubber composition comprises a blend of four rubbers selected from a natural rubber (NR), a polybutadiene rubber (BR), and first and second solution polymerized styrene-butadiene rubbers (SSBRs), a first silica filler having a BET surface area of ≥ 150 m²/g to ≤ 200 m²/g (according to ASTM D1993), and a second silica filler having a BET surface area of ≥ 70 m²/g to ≤ 100 m²/g (according to ASTM D1993), a resin, and ≥ 1 phr to ≤ 20 phr of first and second coupling agents, wherein the first coupling agent is a mercaptosilane and the second coupling agent is selected from a disulfide silane, a tetrasulfide silane, or a combination thereof.

Improvement in rolling resistance for tyre treads generally can be achieved using silica fillers, which increase the stiffness of the rubber. However, optimizing the tread compound for rolling resistance usually results in trade-off in snow performance.

Further compounds are used in rubber compositions for tyre treads and other tyre components as additives and fillers to achieve various effects, and aluminium hydroxide has been employed in rubber compositions. JP 4384847 B2 discloses a pneumatic tyre using a rubber composition with reduced air permeability. Inorganic filler compounds for the carcass rubber are described, examples of inorganic fillers including silica, calcium carbonate, magnesium carbonate, aluminum hydroxide, magnesium hydroxide, alumina, clay, talc, magnesium oxide, and the like, that may be used alone or in combination.

US 6,489,389 B1 describes rubber compositions for tyre treads containing a rubber component containing a styrene-butadiene rubber and a powdery inorganic compound that may be selected from the group consisting of aluminum hydroxide (Al(OH)₃), magnesium hydroxide (Mg(OH)₂), and calcium hydroxide (Ca(OH)₂).

EP 2794286 B1 and FR 2999584 B1 describe rubber compositions for tyres based on at least one diene elastomer, a reinforcing filler comprising silica, a crosslinking system, and an alkali or alkaline earth metal hydroxide, the composition being essentially free of guanidine derivative. FR 3005470 B1 relates to compositions comprising a particular triazine compound and an alkali metal or alkaline-earth metal hydroxide. DE 102018207737 A1 relates to a sulfur-crosslinkable rubber mixture comprising an inorganic material comprising at least one metal cation that may be selected from huntite, hydromagnesite, calcium carbonate, magnesium hydroxide and aluminum hydroxide.

EP 1329420 B1 describes a tread rubber composition improved in grip performance on wet road surfaces and in abrasion resistance containing 5 to 150 phr of an aluminum hydroxide having a BET surface area of at least 30 m²/g to 350 m²/g. EP 1340787 A1 describes a tread rubber composition improved in grip performance on wet road surfaces and in abrasion resistance containing 5 to 60 phr of an aluminum hydroxide with a BET surface area of at least 30 m²/g to 350 m²/g.

CN 117327333 A describes a tread rubber composition comprising 40.0 to 90.0 parts of cis butadiene rubber, 10.0 to 60.0 portions of natural rubber, 60.0 to 90.0 parts of white carbon black, 10.0 to 25.0 parts of aluminum oxide or aluminum hydroxide, 1.0 to 10.0 parts of carbon black, and 4.0-8.0 parts of silane coupling agent.

US 9796826 B2 describes a rubber composition for tyres, comprising, per 100 parts by mass of a rubber component, 2 to 50 parts by mass of at least one of aluminum hydroxide or zirconium oxide each having an average particle size of 0.69 µm or less and a nitrogen adsorption specific surface area of 10 to 50 m²/g. The composition further comprises 5 to 25 parts by mass of at least one resin selected from the group consisting of C5 petroleum resins, C9 petroleum resins, terpene-based resins, coumarone indene resins and aromatic vinyl polymers, and 90 to 130 parts by mass of silica.

EP 3575356 A1 describes a rubber composition for a tread, that has improved wet grip performance and abrasion resistance containing diene-based rubber; and aluminum hydroxide having an average particle diameter (D50) of 0.6 to 1.3 µm and containing 10% by mass or greater of particles having a particle diameter not less than 3.0 µm.

EP 3783061 A1 describes a rubber composition for a tyre tread, comprising a diene-based rubber component, and, based on 100 parts by mass of the diene-based rubber component, 0.5 to 6.0 parts by mass of a branched alkane of 40 to 70 carbon atoms, 0.05 to 3.5 parts by mass of a linear alkane of 45 or more carbon atoms and 1 to 35 parts by mass of aluminum hydroxide.

US 20230383100 A1 describes a rubber composition comprising 50 phr to 100 phr of a styrene butadiene rubber; 0 phr to 50 phr of at least one diene based rubber; 95 phr to 200 phr of filler comprising: i) 50 phr to 100 phr of silica, ii) 40 phr to 70 phr of carbon black, and iii) 5 phr to 30 phr of an inorganic metal hydroxide; 40 phr to 80 phr of plasticizer comprising a hydrocarbon resin having a softening point within a range of 80° C. to 130°C. The inorganic metal hydroxide may be aluminum hydroxide.

US 20230094443 A1 describes a rubber composition comprising: 70 phr to 100 phr of at least one styrene butadiene rubber, 0 phr to 30 phr of at least one further diene-based rubber, from 40 phr to 200 phr of at least one filler, at least 5 phr of aluminum hydroxide, and at least 0.5 phr of a rosin-based resin.

However, a use of any component, such as a metal hydroxide, in combination with different rubbers, silica or resins, improves certain properties at the sacrifice of other properties. The present invention has the object to provide a composition for a tyre which provides for improved snow performance and wet grip without sacrificing rolling resistance.

This object is achieved by a cross-linkable rubber composition according to claim 1, a cross-linked rubber composition according to claim 10, a method according to claim 11 and a tyre according to claim 12. Advantageous embodiments are the subject of dependent claims. They may be combined freely unless the context clearly indicates otherwise.

Hence, a cross-linkable rubber composition is provided, the cross-linkable rubber composition comprising, per hundred parts by weight of rubber (phr):
100 phr of a blend of a natural rubber (NR), a polybutadiene rubber (BR), and first and second solution polymerized styrene-butadiene rubbers (SSBR), the blend comprising
≥ 10 phr to ≤ 40 phr of NR,
≥ 20 phr to ≤ 80 phr of BR,
≥ 10 phr to ≤ 50 phr of the first SSBR having a glass transition temperature T_{g}, determined by differential scanning calorimetry (DSC) according to ISO 22768, in a range of ≥ -30°C to ≤ 0°C, and
≥ 10 phr to ≤ 50 phr of the second SSBR having a glass transition temperature T_{g}, determined by differential scanning calorimetry (DSC) according to ISO 22768, in a range of ≥ -120°C to ≤ -40°C,
≥ 60 phr to ≤ 130 phr of a first silica filler having a BET surface area in a range of ≥ 150 m²/g to ≤ 200 m²/g, determined according to ASTM D1993, and ≥ 50 phr to ≤ 100 phr of a second silica filler having a BET surface area in a range of ≥ 70 m²/g to ≤ 100 m²/g, determined according to ASTM D1993, and
a resin,
wherein the rubber composition comprises in a range of ≥ 1 phr to ≤ 40 phr of aluminium hydroxide.

It has surprisingly been found that aluminium hydroxide can balance an increased amount of silica filler in a rubber composition comprising a blend of four rubbers and two silicas of different BET surface area. Aluminium hydroxide has been found to provide improved handling performance on snow, without compromising rolling resistance. Tread rubbers based on compositions comprising aluminium hydroxide have been found to provide for a combination of good handling performance on snow (usually denoted snow handling) and wet braking performance, which provides a notable advantage, as these features are difficult to balance.

The term "phr" as used herein, and according to conventional practice, refers to "parts by weight of a respective material per 100 parts by weight of rubber or elastomer". It will be understood that in formulations discussed in connection with the present invention, in accordance with this conventional practice, the phr amount of all rubber components adds up to 100 phr. To differentiate between two different solution polymerized styrene-butadiene rubbers (SSBRs), terms like first SSBR and second SSBR are used. In embodiments where two different silica fillers are present, the terms first silica filler and second silica filler are used likewise to differentiate between the respective silicas. The cross-linkable rubber composition according to the invention comprises cross-linkable groups in the individual rubber components. They may be cross-linked (cured, vulcanised) by methods known to a skilled person in the rubber technology field.

As used herein, the term "handling" refers to how well a vehicle handles the road and how well the vehicle responds to steering input. Tyre handling is a measurement of what a driver can perform with a car such as steering, stability during lane change and cornering, lap time, accelerating and braking.

Aluminium hydroxide has advantageously provided improved snow performance in the rubber composition.

In embodiments, the aluminium hydroxide has i) a D50 particle diameter in a range of ≥ 1.6 µm to ≤ 2.1 µm, preferably in a range of ≥ 1.8 µm to ≤ 2.1 µm, and/or ii) a BET surface area in a range of ≥ 4 m²/g to ≤ 7 m²/g, preferably about 4 m²/g, and/or iii) an oil absorption in a range of ≥ 27 mL/100g to ≤ 33 mL/100g, preferably in a range of ≥ 27 mL/100g to ≤ 32 mL/100g. Examples of commercial aluminium hydroxide are Martinal^{®} OL-107 LEO, preferably Martinal^{®} OL-104 LEO (Huber Advanced Materials). The D50 particle diameter was determined according to ISO 13320 using laser scattering CILAS 1064 L. The BET surface area was determined according to ISO 18852:2015 using a Gemini VII device. The oil absorption was determined according to ISO 4656.

In embodiments, the rubber composition comprises in a range of ≥ 5 phr to ≤ 35 phr, preferably in a range of ≥ 10 phr to ≤ 30 phr, of aluminium hydroxide. Using aluminium hydroxide in these ranges can achieve improvements in snow performance and wet performance. A balance of snow performance and wet performance is particularly challenging to achieve.

The rubber composition comprises two silica fillers of different BET surface area. The BET (Brunauer, Emmett and Teller) theory is commonly used to evaluate gas adsorption data and generate a specific surface area result expressed in units of area per mass of sample (m²/g). The technique is referenced by several standard organizations such as ASTM. The first silica filler has a BET surface area in a range of ≥ 150 m²/g to ≤ 200 m²/g (according to ASTM D1993) and the second silica filler has a BET surface area in a range of ≥ 70 m²/g to ≤ 100 m²/g (according to ASTM D1993).

It is assumed that the combination of first and second silica at least partially provides for the improvement in the handling while maintaining rolling resistance of the tyre. In embodiments, the rubber composition comprises first and second silica filler in an amount in a range of ≥ 150 phr to ≤ 180 phr, preferably in a range of ≥ 160 phr to ≤ 170 phr.

It is assumed that filler levels of silica, particularly of a combination of first and second silica, in these ranges can support favourable handling properties.

In embodiments, the first silica filler has a BET surface area in a range of ≥ 150 m²/g to ≤ 170 m²/g (according to ASTM D1993). Silica which meets a BET surface area of 150 to 200 m²/g or 150 to 170 m²/g (according to ASTM D1993) includes highly dispersible silica (HDS) and semi HDS. Highly dispersible silica may be precipitated from a silicate solution, for example, by hydrolysis and/or high temperature oxidation conversion. Examples of commercial silica having a BET surface area of 150 to 170 m²/g are Ultrasil^{®} 7000GR (Evonik Industries AG), Zeosil^{®}1165MP (Solvay AG), and HiSil^{®} EZ160G-D (PPG Industries).

In embodiments, the second silica filler has a BET surface area in a range of ≥ 75 m²/g to ≤ 95 m²/g (according to ASTM D1993). An example of a commercial silica having a BET surface area of 75 to 95 m²/g is Zeosil^{®}1085 (Solvay AG).

In embodiments, the rubber composition comprises the first silica filler in an amount in a range of ≥ 70 phr to ≤ 100 phr, preferably in a range of ≥ 80 phr to ≤ 95 phr, the first silica filler preferably having a BET surface area in a range of ≥ 150 m²/g to ≤ 170 m²/g, determined according to ASTM D1993.

In embodiments, the rubber composition comprises the second silica filler in an amount in a range of ≥ 65 phr to ≤ 85 phr, preferably in a range of ≥ 70 phr to ≤ 80 phr, where the second silica filler preferably has a BET surface area in a range of ≥ 75 m²/g to ≤ 95 m²/g, determined according to ASTM D1993. An increase in the amount of silica with a BET surface area in a range of ≥ 75 m²/g to ≤ 95 m²/g in a silica blend can result in enhancing the snow handling and wet grip while maintaining rolling resistance.

The rubber composition may comprise of from ≥ 80 phr to ≤ 95 phr of the first silica filler and of from ≥ 70 phr to ≤ 80 phr of the second silica filler. Embodiments of the rubber composition comprising approximately equal amounts of first and second silica filler can provide particularly good morphology and handling properties.

The rubber composition may comprise carbon black. The rubber composition may comprise carbon black in an amount in a range of ≥ 1 phr to ≤ 10 phr.

The composition comprises a blend of four rubbers: a natural rubber (NR), a polybutadiene rubber (BR), and first and second solution polymerized styrene-butadiene rubbers (SSBRs) of different glass transition temperature. Without being bound to a specific theory it is assumed that the polymer blend contributes to the good handling performance on different underground of the cured composition that is necessary for all-season tyres.

In embodiments, the butadiene rubber (BR) has a *cis* group content, as determined by infrared spectroscopy (IR), of ≥ 95%, preferably of ≥ 97%. A butadiene rubber (BR) with a high *cis* group content is obtained under neodymium catalysis (Nd BR). The *cis* content of the polybutadiene rubber may be determined with FTIR (Fourier-transform infrared spectroscopy). Butadiene rubber obtained under neodymium catalysis may be denoted a *cis* 1,4-polybutadine.

The natural rubber may be a sheet processed natural rubber such as a Ribbed Smoked Sheets (RSS) rubber or may be a Technically Specified Rubber (TSR). TSR grades such as TSR10 or TSR20 are preferred for a tyre tread compound.

The first SSBR has a glass transition temperature T_{g} of ≥ -30 °C to ≤ 0 °C. The glass transition temperatures T_{g} of the rubber compounds as referred herein are measured by differential scanning calorimetry (DSC) according to ISO 22768. This norm specifies a heating rate of 20 °C/min. Preferably the first SSBR has a glass transition temperature T_{g} of ≥ -28 °C to ≤ -20 °C. The first SSBR thus is a rubber with comparatively high T_{g}.

Such a SSBR preferably comprises alkoxysilane groups such as -Si(OR)₃ with each R independently being an alkyl rest. Preferred are trimethoxysilane groups and triethoxysilane groups. Furthermore, this SSBR also comprises primary amino groups -NH₂. Such dual-functionalised SSBRs are commercially available and may be synthesised from non-functionalised SSBRs by methods known in the art such as hydrosilylation with H-Si(OR)₃ compounds, thiol-ene-coupling using aminothiol compounds and hydrosilylation with H-Si(OR)₂-Linker-NH₂ compounds. For example, and as taught in US 7,342,070, the first rubber may be of the formula (I) or (II): 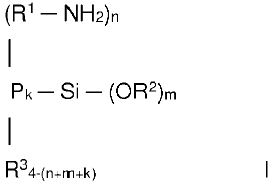 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 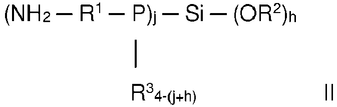 wherein P, R¹, R² and R³ have the same definitions as give for the above-mentioned formula I, j is an integer of 1 to 3, and h is an integer of 1 to 3, with the provision that j+h is an integer of 2 to 4. The first SSBR may comprise ≥ 25% to ≤ 35%, preferably ≥ 27 to ≤ 29%, as determined by nuclear magnetic resonance (NMR) spectroscopy, of styrenic groups. In the first SSBR ≥ 75 mol-%, preferably ≥ 90 mol-% to ≤ 100 mol-%, as determined by nuclear magnetic resonance (NMR) spectroscopy, of the alkoxysilane groups and the primary amino groups are located at the chain ends of the rubber polymer chains. A specific example for a commercial SSBR having a T_{g} of ≥ -30 °C to ≤ 0 °C is HPR850 manufactured by Eneos Corporation.

The first SSBR is combined with a second low T_{g} SSBR. The second solution polymerized styrene-butadiene rubber (SSBR) has a glass transition temperature T_{g} (measured by differential scanning calorimetry (DSC) according to ISO 22768) of ≥ - 120 °C to ≤ - 40 °C. Preferably, the second SSBR has a glass transition temperature T_{g} of ≥ -90 °C to ≤ -50 °C, more preferably of ≥ -80 °C to ≤ -60 °C. Using a low T_{g} SSBR in combination with a first high T_{g} SSBR can improve snow and rolling resistance performance in balance with wet grip. Preferably, the second SSBR is a functionalised styrene-butadiene rubber. A specific example for a commercial SSBR having a T_{g} of ≥ - 120 °C to ≤ - 40 °C is SPRINTAN^{™} SLR 3402, with a T_{g} of -65 °C.

Preferably, the cross-linkable rubber composition may comprise the first SSBR combined with the second SSBR in an amount of < 50 phr. Such amount can balance snow and rolling resistance performance in balance with wet grip. More preferred, the cross-linkable rubber composition may comprise the first SSBR combined with the second SSBR in an amount in phr equal to or lower than the total phr amount of BR in the composition. A blend of the first and second SSBR in total amount of less than or equal to the phr loading of BR can contribute to maintain a desired Tg of the rubber composition to balance snow and rolling resistance performance without deteriorating the wet grip.

In embodiments, the composition comprises:
≥ 10 phr to ≤ 35 phr, preferably ≥ 15 phr to ≤ 30 phr, of NR; and/or
≥ 30 phr to ≤ 60 phr, preferably ≥ 35 phr to ≤ 55 phr, of BR; and/or
≥ 10 phr to ≤ 30 phr, preferably ≥ 10 phr to ≤ 25 phr, of the first SSBR; and/or
≥ 10 phr to ≤ 40 phr, preferably ≥ 15 phr to ≤ 30 phr, of the second SSBR.

It is understood that the phr amount of all rubber components in the composition adds up to 100 phr. In these ranges the rubbers can improve snow handling of the cured tread rubber combined with favourable wet grip.

The cross-linkable rubber composition may comprise at least one coupling agent. The cross-linkable rubber composition may comprise in a range of ≥ 1 phr to ≤ 25 phr of at least one coupling agent. In embodiments, the rubber composition may comprise first and second coupling agents.

In embodiments, the rubber composition comprises in a range of ≥ 5 phr to ≤ 20 phr of a mercaptosilane. In the context of this invention a "mercaptosilane" denotes a silane coupling agent containing one or more mercapto group(s) (-SH group, also denoted thiol group, sulfanyl group or sulfhydryl group) or other sulfur-containing groups that function as protected mercapto groups or react to form a mercapto group. Examples for mercaptosilanes are 3-mercaptopropylmethyldimethoxysilane, 3-mercaptopropyltrimethoxysilane (MTMO), (3-mercaptopropyl)triethoxysilane

(MPTES), 3-mercaptopropyl-di(tridecan-1-oxy-13-penta(ethyleneoxide)) ethoxysilane (VP Si363), 3-octanoylthio-1-propyltriethoxysilane (NXT), thiocyanatosilane (TCPTEO), trimethoxy(3-thiocyanatopropyl)silane, triethoxy(3- thiocyanatopropyl)silane and 3-isocyanatopropyltriethoxysilane. Commercial examples for mercaptosilane are VP Si 363 available from Evonik Industries and NXT available from Momentive. The use of a mercaptosilane is assumed to improve the rolling resistance of the cross-linked rubber composition.

In embodiments, the rubber composition comprises in a range of ≥ 5 phr to ≤ 15 phr of a mercaptosilane and in a range of ≥ 1 phr to ≤ 10 phr of a silane selected from a disulfide silane, a tetrasulfide silane, or a combination thereof. A preferred example for a disulphide silane is bis-(3-triethoxysilylpropyl)disulfide (TESPD) available from Evonik Industries. A preferred example for a tetrasulphide silane is bis-(3-triethoxysilylpropyl)tetrasulfide (TESPT) available from Evonik Industries. Further disulfide silane, a tetrasulfide silane, or a combination thereof may be selected from the group comprising ethoxy and/or methoxy groups selected from the group of vinyltriethoxysilane(VTEO), Vinyltris(2-methoxyethoxy)silane (VTMOEO), 3 - chloropropyltrimethoxy silane (CPTEO), 3-methacryloxypropyl-trimethoxysilane (MEMO), 3-aminopropyltriethoxysilane (AMEO), propyltriethoxysilane (PTEO), octyltriethoxysilane (OCTEO).

The cross-linkable rubber composition may comprise in a range of ≥ 10 phr to ≤ 30 phr, preferably in a range of ≥ 15 phr to ≤ 25 phr, of a resin. The resin may have a glass transition temperature T_{g} of ≥ 30 °C, preferably in a range of ≥ 60 °C to ≤ 130 °C. A variety of aliphatic or aromatic resins may be used. Important base monomers are indene, methyindenes, dicyclopentadiene, styrene, alpha-methylstyrene and various vinyl toluenes. The resin may be selected from the group of alpha-methyl styrene (AMS) resin, terpene resin, polyterpene resin, terpene phenolic resin, a C5 resin, C9 resin, coumarone indene resin, dicyclopentadiene (DCPD) resin or a combination thereof. The term "C5 resin" refers to hydrocarbon resins obtained from the polymerization of C5 aliphatic olefin and diolefin. The term "C9 resin" refers to aromatic hydrocarbon resins made from C9, or more generally from a C8 to C10 fraction, aromatic hydrocarbons. Further examples for aromatic resins are coumarone-indene resins.

In embodiments, the composition comprises an alpha-methyl styrene resin. The term "alpha-methyl styrene resin" refers to copolymer resins of styrene and alpha-methyl styrene. In embodiments, the composition comprises in a range of ≥ 10 phr to ≤ 30 phr, preferably in a range of ≥ 15 phr to ≤ 25 phr, of an alpha-methyl styrene resin. Such embodiments can provide improved wet grip properties.

The cross-linkable rubber composition may be sulfur-vulcanizable and/or peroxide-vulcanizable. A usable sulfur-vulcanizing agent is elemental sulfur. Additives can be added to the cross-linkable rubber composition. Examples of usual additives are stabilizers, antioxidants, lubricants, fillers, dyes, pigments, or flame retardants. The cross-linkable rubber composition may be compounded by methods generally known in the art, such as mixing the sulfur-vulcanizable rubbers with commonly used additives such as, for example, sulfur donors, curing aids, such as activators and retarders, and processing additives, such as oils, resins including tackifying resins, plasticizers, fillers, pigments, fatty acid, zinc oxide, waxes, and antioxidants.

Another aspect of the present invention relates to a cross-linked rubber composition that is obtained by cross-linking a rubber composition according to the invention as described herein.

The present invention also relates to a method of preparing a tyre, comprising the steps of:
- providing a tyre assembly comprising a cross-linkable rubber composition according to the invention, and
- cross-linking at least the cross-linkable rubber composition according to the invention in the tyre assembly.

The present invention also encompasses a tyre comprising a tyre tread, characterised in that the tyre tread comprises a cross-linked rubber composition according to the invention. In embodiments, the tyre is an all-season tyre or a winter tyre.

The present invention will be further described with reference to the following examples without wishing to be limited by them.

### Example 1

In accordance with the preceding, cross-linkable rubber compositions were prepared according to the following table 1. Composition "Ref" is a comparative example and composition "I1" is a composition according to the invention. Amounts for the components are given in phr. In a first step, the rubber components were added and mixed, followed by a second step wherein the additives were added and mixed and a last step wherein the curing package was added.

**Table 1: Compositions**

| Component | Ref1 (phr) | I1 (phr) |
|---|---|---|
| NR | 15 | 15 |
| BR | 50 | 50 |
| SSBR 1 | 10 | 10 |
| SSBR 2 | 25 | 25 |
| Silica 1 | 78 | 78 |
| Silica 2 | 86 | 86 |
| Silane 1 | 14 | 14 |
| Hydrocarbon resin | 28 | 28 |
| Carbon black | 8 | 8 |
| Aluminium hydroxide | - | 15.9 |
| Process oil | 38 | 38 |

Natural rubber (NR) was TSR 20, with a Mooney Viscosity 80 and a Tg of -70 °C.

Butadiene rubber (BR) was Nd catalyzed 1,4 butadiene rubber with a cis content of 97%, supplied by Arlanxeo (Buna CB 25).

SSBR 1 was HPR850 manufactured by Eneos Corporation, a solution polymerized styrene-butadiene rubber (SSBR) comprising an alkoxysilane group and a primary amino group with a styrene content of 27.5 wt.% and vinyl content of 59% and a T_{g} of -25 °C. Non-oil extended product was used.

SSBR 2 was was SOL-5131H with a styrene content of 15%, a vinyl content of 30% and a T_{g} of - 62 °C supplied by Kumho Petrochemical.

Silica 1 was High Dispersible Silica (P-Type) with a BET surface of 150-180 m²/g supplied by PPG Industries.

Silica 2 was Zeosil^{®}1085 with a BET surface of 90 m²/g from Solvay.

Carbon black was N339 (HAF-HS) supplied by China Synthetic Rubber .

Silane 1 was NXT (mercaptosilane) supplied by Momentive.

The hydrocarbon resin was Impera^{™} P1504 alpha-methyl styrene (AMS) hydrocarbon resin supplied by Synthomer.

Aluminium hydroxide was Martinal^{®} OL-104 LEO supplied by Huber Advanced Materials.

The process oil was TDAE (treated distillate aromatic extracts), a rubber processing oil with high aromatic content, supplied by Klaus Dahleke GmbH & Co.

Four sets of tyres with tyre size 245/45 R18 were prepared. Two sets were all season tyres with respective tread profiles manufactured from the reference tread compound (Ref1) for a set of reference tyres (RT1) and manufactured from the inventive compound I1 for a set of tyres according to the invention (A1). Two further sets were winter tyres with respective tread profiles manufactured from the reference tread compound (Ref1) for a set of reference tyres (RT2) and manufactured from the inventive compound I1 for a set of tyres according to the invention (W1).

**Table 2: Tyre test results**

| | RT1 | A1 | RT2 | W1 |
|---|---|---|---|---|
| Rolling resistance | 100 | 100 | 100 | 100 |
| Wet braking | 100 | 104 | 100 | 102 |
| Dry braking | 100 | 100 | 100 | 101 |
| Snow performance | 100 | 107 | 100 | 106 |

The results illustrate an improvement in snow performance and wet braking without compromising rolling resistance and dry braking.

### Example 2

In accordance with the preceding, cross-linkable rubber compositions were prepared according to the following Table 3. Composition "Ref2" is a comparative example and composition "I2" is a composition according to the invention. Amounts for the components are given in phr. Mixing was prepared using the method described in the previous example.

**Table 3: Compositions**

| Component | Ref2 (phr) | I2 (phr) |
|---|---|---|
| NR | 15 | 15 |
| BR | 50 | 50 |
| SSBR 1 | 10 | 10 |
| SSBR 3 | 25 | 25 |
| Silica 1 | 85 | 85 |
| Silica 2 | 76 | 76 |
| Silane 2 | 8.5 | 8.5 |
| Silane 3 | 5.3 | 5.3 |
| Hydrocarbon resin | 18 | 18 |
| Carbon black | 4 | 4 |
| Aluminium hydroxide | - | 15.2 |
| Process oil | 42 | 42 |

Ingredients were as described in the previous example, except:
SSBR 3 was SPRINTAN^{®} 3402 with a styrene content of 15%, a vinyl content of 30% and a T_{g} of -62 °C supplied by Synthos.
Silane 2 was Si 363^{™} (mercaptosilane) supplied by Evonik.
Silane 3 was Si-266^{™} (TESPD silane) supplied by Evonik.

Four sets of tyres with tyre size 245/45 R18 were prepared. Two sets were all season tyres with respective tread profiles manufactured from the reference tread compound (Ref2) for a set of reference tyres (RT3) and manufactured from the inventive compound I2 for a set of tyres according to the invention (A2). Two further sets were winter tyres with respective tread profiles manufactured from the reference tread compound (Ref2) for a set of reference tyres (RT4) and manufactured from the inventive compound I2 for a set of tyres according to the invention (W2).

**Table 2: Tyre test results**

| | RT3 | A2 | RT4 | W2 |
|---|---|---|---|---|
| Rolling resistance | 100 | 100 | 100 | 100 |
| Wet braking | 100 | 102 | 100 | 101 |
| Dry braking | 100 | 102 | 100 | 100 |
| Snow performance | 100 | 103 | 100 | 102 |

The results illustrate an improvement in snow performance and wet braking without compromising rolling resistance and dry braking.

## Claims

1. A cross-linkable rubber composition, the cross-linkable rubber composition comprising, per hundred parts by weight of rubber (phr):
100 phr of a blend of a natural rubber (NR), a polybutadiene rubber (BR), and first and second solution polymerized styrene-butadiene rubbers (SSBR), the blend comprising
≥ 10 phr to ≤ 40 phr of NR,
≥ 20 phr to ≤ 80 phr of BR,
≥ 10 phr to ≤ 50 phr of the first SSBR having a glass transition temperature T_{g}, determined by differential scanning calorimetry (DSC) according to ISO 22768, in a range of ≥ -30°C to ≤ 0°C, and
≥ 10 phr to ≤ 50 phr of the second SSBR having a glass transition temperature T_{g}, determined by differential scanning calorimetry (DSC) according to ISO 22768, in a range of ≥ -120°C to ≤ -40°C,
≥ 60 phr to ≤ 130 phr of a first silica filler having a BET surface area in a range of ≥ 150 m²/g to ≤ 200 m²/g, determined according to ASTM D1993, and
≥ 50 phr to ≤ 100 phr of a second silica filler having a BET surface area in a range of ≥ 70 m²/g to ≤ 100 m²/g, determined according to ASTM D1993, and
a resin,
wherein the rubber composition comprises in a range of ≥ 1 phr to ≤ 40 phr of aluminium hydroxide.

2. The rubber composition according to claim 1, wherein the rubber composition comprises in a range of ≥ 5 phr to ≤ 35 phr, preferably in a range of ≥ 10 phr to ≤ 30 phr, of aluminium hydroxide.

3. The rubber composition according to any one of the preceding claims, wherein the rubber composition comprises first and second silica filler in an amount in a range of ≥ 150 phr to ≤ 180 phr, preferably in a range of ≥ 160 phr to ≤ 170 phr.

4. The rubber composition according to any one of the preceding claims, wherein the rubber composition comprises in a range of ≥ 70 phr to ≤ 100 phr, preferably in a range of ≥ 80 phr to ≤ 95 phr, of the first silica filler, preferably having a BET surface area in a range of ≥ 150 m²/g to ≤ 170 m²/g, determined according to ASTM D1993.

5. The rubber composition according to any one of the preceding claims, wherein the rubber composition comprises in a range of ≥ 65 phr to ≤ 85 phr, preferably in a range of ≥ 70 phr to ≤ 80 phr, of the second silica filler, preferably having a BET surface area in a range of ≥ 75 m²/g to ≤ 95 m²/g, determined according to ASTM D1993.

6. The rubber composition according to any one of the preceding claims, wherein the rubber composition comprises in a range of ≥ 5 phr to ≤ 20 phr of a mercaptosilane.

7. The rubber composition according to any one of the preceding claims, wherein the rubber composition comprises in a range of ≥ 5 phr to ≤ 15 phr of a mercaptosilane and in a range of ≥ 1 phr to ≤ 10 phr of a silane selected from a disulfide silane, a tetrasulfide silane, or a combination thereof.

8. The rubber composition according to one of the preceding claims, wherein the rubber composition comprises in a range of ≥ 10 phr to ≤ 30 phr, preferably in a range of ≥ 15 phr to ≤ 25 phr, of an alpha-methyl styrene resin.

9. The rubber composition according to any one of the preceding claims, wherein the composition comprises:
≥ 10 phr to ≤ 35 phr, preferably ≥ 15 phr to ≤ 30 phr, of NR; and/or
≥ 30 phr to ≤ 60 phr, preferably ≥ 35 phr to ≤ 55 phr, of BR; and/or
≥ 10 phr to ≤ 30 phr, preferably ≥ 10 phr to ≤ 25 phr, of the first SSBR; and/or
≥ 10 phr to ≤ 40 phr, preferably ≥ 15 phr to ≤ 30 phr, of the second SSBR.

10. A cross-linked rubber composition, **characterised in that** it is obtained by cross-linking a rubber composition according to one of claims 1 to 9.

11. A method of preparing a tyre, comprising the steps of:
- providing a tyre assembly comprising a cross-linkable rubber composition according to one of claims 1 to 9;
- cross-linking at least the cross-linkable rubber composition according to any one of claims 1 to 9 in the tyre assembly.

12. A tyre comprising a tyre tread, **characterised in that** the tyre tread comprises a cross-linked rubber composition according to claim 10.
